(19) Europäisches Patentamt
European Patent Office
Office européen des brevets

(11) EP 4 428 189 A1

(12) EUROPEAN PATENT APPLICATION
published in accordance with Art. 153(4) EPC

(43) Date of publication:
**11.09.2024 Bulletin 2024/37**

(21) Application number: **22889770.8**

(22) Date of filing: **18.10.2022**

(51) International Patent Classification (IPC):
***C08L 9/00*** *(2006.01)* ***B60C 1/00*** *(2006.01)*
***C08K 5/18*** *(2006.01)*

(52) Cooperative Patent Classification (CPC):
**B60C 1/00; C08K 5/18; C08L 9/00;** Y02T 10/86

(86) International application number:
**PCT/JP2022/038824**

(87) International publication number:
**WO 2023/079949 (11.05.2023 Gazette 2023/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.11.2021 JP 2021181512**

(71) Applicant: **BRIDGESTONE CORPORATION**
**Chuo-ku**
**Tokyo 104-8340 (JP)**

(72) Inventors:
- **HIRATA, Masatoshi**
  **Tokyo 104-8340 (JP)**
- **SAITO, Kosuke**
  **Tokyo 104-8340 (JP)**

(74) Representative: **Marks & Clerk LLP**
**15 Fetter Lane**
**London EC4A 1BW (GB)**

(54) **RUBBER COMPOSITION FOR TIRE, RUBBER MEMBER FOR TIRE, AND TIRE**

(57) The present disclosure is directed to providing a tire rubber composition capable of achieving both on-ice performance and breaking resistance (especially, breaking resistance after exposure to high temperatures) of a tire rubber member having voids, and the solution is to provide a tire rubber composition including a rubber component, a void-introducing agent, and an amine-based antioxidant represented by the following general formula (1):

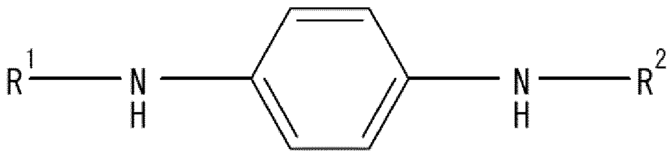
··· (1)

where $R^1$ and $R^2$ are each independently a monovalent saturated hydrocarbon group, wherein the content of the amine-based antioxidant is 0.1 to 11 parts by mass per 100 parts by mass of the rubber component.

EP 4 428 189 A1

## Description

TECHNICAL FIELD

The present disclosure relates to a tire rubber composition, a tire rubber member, and a tire.

BACKGROUND

Conventionally, a technique to improve the on-ice performance of a tire has been known in which voids such as foam holes are introduced into the rubber member of the tire tread that is to come into contact with the road surface. For example, PTL 1 below discloses a tire including a foam rubber layer provided on the tire tread, wherein the foam ratio of the foam rubber layer is 3% to 50%, and the foam rubber layer contains a rubber composition including ethylene-vinyl alcohol copolymer fibers coated with a resin having affinity to the rubber component and powder of an inorganic compound with a mean particle diameter of 10 μm or more.

CITATION LIST

Patent Literature

PTL 1: WO 2014/024466 A1

SUMMARY

(Technical Problem)

However, the introduction of voids such as foam holes into rubber members generally tends to reduce the breaking resistance of the rubber members. Therefore, there is room for improvement in the breaking resistance of a conventional tire rubber member having voids.

Additionally, since heat is generated in the tire tread during driving, the rubber member used in the tread is exposed to high temperatures. Therefore, a tire rubber member having voids is required to have improved breaking resistance after exposure to high temperatures when application to tire treads is considered.

Accordingly, the present disclosure is directed to solving the problem of the aforementioned prior art and to providing a tire rubber composition capable of achieving both on-ice performance and breaking resistance (especially, breaking resistance after exposure to high temperatures) of a tire rubber member having voids.

The present disclosure is also directed to providing a tire rubber member and a tire having excellent on-ice performance and breaking resistance (especially, breaking resistance after exposure to high temperatures) despite having voids.

(Solution to Problem)

The primary features of a tire rubber composition, a tire rubber member, and a tire of the present disclosure that solve the above problem are as follows.

[1] A tire rubber composition comprising:

a rubber component, a void-introducing agent, and an amine-based antioxidant represented by the following general formula (1):

[Chem. 1]

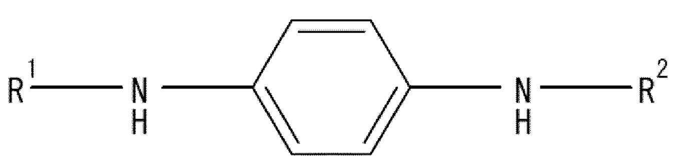

··· (1)

where $R^1$ and $R^2$ are each independently a monovalent saturated hydrocarbon group,
wherein a content of the amine-based antioxidant is 0.1 to 11 parts by mass per 100 parts by mass of the rubber component.

[2] The tire rubber composition according to [1], wherein the rubber component comprises at least one selected from the group consisting of isoprene skeleton rubber, styrene-butadiene rubber, butadiene rubber, and chloroprene rubber.
[3] The tire rubber composition according to [1] or [2], wherein $R^1$ and $R^2$ in the above general formula (1) are each independently a chain or cyclic monovalent saturated hydrocarbon group having 1 to 20 carbon atoms.
[4] A tire rubber member having voids, comprising:

a rubber component and an amine-based antioxidant represented by the following general formula (1):

[Chem. 2]

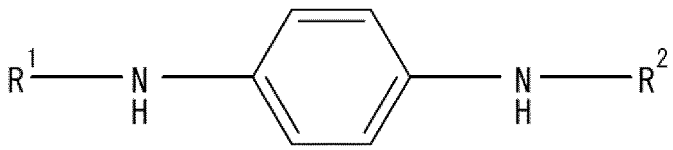

··· (1)

where $R^1$ and $R^2$ are each independently a monovalent saturated hydrocarbon group,
wherein an amount of the amine-based antioxidant is 0.1 to 11 parts by mass per 100 parts by mass of the rubber component.

[5] A tire comprising a rubber member made of the tire rubber composition according to any one of [1] to [3], or the tire rubber member according to [4].

(Advantageous Effect)

According to the present disclosure, it is possible to provide a tire rubber composition capable of achieving both on-ice performance and breaking resistance of a tire rubber member having voids.
In addition, according to the present disclosure, it is possible to provide a tire rubber member and a tire having excellent on-ice performance and breaking resistance despite having voids.

DETAILED DESCRIPTION

A tire rubber composition, a tire rubber member, and a tire of the present disclosure are described below in detail with reference to embodiments thereof.

<Tire rubber composition>

The tire rubber composition of the present disclosure includes a rubber component, a void-introducing agent, and an amine-based antioxidant represented by the following general formula (1):

[Chem. 3]

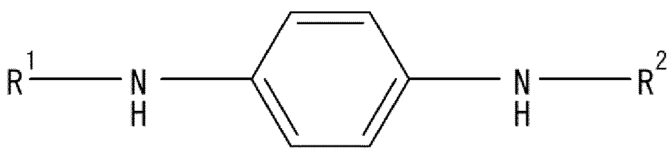

··· (1)

where $R^1$ and $R^2$ are each independently a monovalent saturated hydrocarbon group. Further, in the tire rubber composition of the present disclosure, the content of the amine-based antioxidant is 0.1 to 11 parts by mass per 100 parts

by mass of the rubber component.

Since the tire rubber composition of the present disclosure contains the void-introducing agent, a rubber member obtained from that rubber composition has voids generated by the void-introducing agent and also has an excellent on-ice performance.

Furthermore, in the tire rubber composition of the present disclosure, since the amine-based antioxidant represented by the above general formula (1) is blended in the amount of 0.1 parts by mass or more per 100 parts by mass of the rubber component, the aging resistance (ozone resistance) of the rubber composition is improved. In addition, decreases in the tensile stress, the elongation at break (EB), and the tensile strength (TB) of the rubber composition after exposure to high temperatures can be suppressed to thereby improve the breaking resistance.

Accordingly, when the tire rubber composition of the present disclosure is applied to a rubber member, it is possible to achieve both on-ice performance and breaking resistance (especially, breaking resistance after exposure to high temperatures) of the tire rubber member having voids. In addition, when the tire rubber composition of the present disclosure is applied to the tread, the breaking resistance and the crack resistance of the tread where heat is generated during driving can be improved.

(Rubber component)

The tire rubber composition of the present disclosure contains a rubber component, and the rubber component provides rubber elasticity to the composition. As the rubber component, diene rubber is preferred, and isoprene skeleton rubber, styrene-butadiene rubber (SBR), butadiene rubber (BR), and chloroprene rubber (CR) are more preferred. As used herein, isoprene skeleton rubber refers to rubber with isoprene units as the main skeleton thereof, examples thereof specifically include natural rubber (NR) and synthetic isoprene rubber (IR). When the rubber component includes at least one selected from the group consisting of isoprene skeleton rubber, styrene-butadiene rubber, butadiene rubber, and chloroprene rubber, the rubber composition has excellent rubber elasticity and becomes more suitable for tire applications. In addition, when the rubber component includes at least one selected from the group consisting of isoprene skeleton rubber, styrene-butadiene rubber, butadiene rubber, and chloroprene rubber, the effects of the present disclosure (the effect of improving aging resistance through the use of an amine-based antioxidant, the effect of suppressing the decreases in the tensile stress, the elongation at break (EB), and the tensile strength (TB) after exposure to high temperatures, as well as, in an aspect where a foaming agent is included as the void-introducing agent, the effect of improving the balance between the reaction speed of the foaming agent and the vulcanization reaction speed of the rubber composition) are likely to become prominent. The content of diene rubber, such as isoprene skeleton rubber, styrene-butadiene rubber, butadiene rubber, and chloroprene rubber, in the rubber component, is preferably 80 mass% or more, more preferably 90 mass% or more, and may be 100 mass%. One of the above-mentioned rubber components may be used individually, or two or more of them may be used as a blend.

(Void-introducing agent)

The tire rubber composition of the present disclosure contains a void-introducing agent. When the rubber composition contains the void-introducing agent, a vulcanized rubber (rubber member) obtained by vulcanizing the rubber composition has voids on the surface or inside, or on the surface and inside. As a result, the tire to which this vulcanized rubber is applied has flexibility, it easily adheres to icy road surfaces, and water on the road surface is easily absorbed into the voids on the tire surface, so that water is likely removed from the icy or snowy surfaces. Accordingly, a tire to which the tire rubber composition is applied has an improved on-ice braking performance.

As the void-introducing agent, for example, foaming agents, sulfuric acid metal salts, thermally expandable microcapsules, porous cellulose particles, lignin derivatives, or the like can be used, and one or more of these may be used alone or in a mixture of two or more. Of these, in view of the on-ice performance of the tire, the foaming agent is preferred.

The content of the void-introducing agent in the rubber composition is not particularly limited, but is preferably 0.1 to 20 parts by mass, more preferably 0.3 to 10 parts by mass, and more preferably 0.5 to 5 parts by mass per 100 parts by mass of the rubber component, from the viewpoint of obtaining the desired porosity and maintaining breaking resistance, wear resistance performance, and other performances.

In addition, although the content ratio of the void-introducing agent to the amine-based antioxidant to be described below is not particularly limited, the mass ratio of the void-introducing agent to the amine-based antioxidant (void-introducing agent / amine-based antioxidant) is preferably 0.1 or more, more preferably 0.3 or more, and even more preferably 0.5 or more, and is preferably 10 or less, more preferably 7 or less, and even more preferably 6 or less, from the viewpoint of improving breaking resistance and on-ice performance.

--Foaming agent--

When the rubber composition contains a foaming agent as the void-introducing agent, the foaming agent generates bubbles in a vulcanized rubber (rubber member) during vulcanization of the rubber composition, so that the vulcanized rubber can be made into foamed rubber. Since the foamed rubber has flexibility, the tire surface made of vulcanized rubber easily adheres to icy road surfaces. In addition, the bubbles also create holes (foaming holes) in the vulcanized rubber surface and tire surface, which function as water channels to drain water.

Specifically, examples of the foaming agent include azodicarbonamide (ADCA), dinitrosopentamethylenetetramine (DPT), dinitrosopentastyrenetetramine, benzene sulfonyl hydrazide derivatives, p,p'-oxybisbenzenesulfonyl hydrazide (OBSH), inorganic foaming agents, such as carbonates, e.g., ammonium carbonate, sodium carbonate, and potassium carbonate, and bicarbonates (hydrogen carbonates), e.g., ammonium bicarbonate, sodium bicarbonate, potassium bicarbonate, and nitroso sulfonyl azo compounds, N,N'-dimethyl-N,N'-dinitrosophthalamide, toluene sulfonyl hydrazide, p-toluenesulfonyl semicarbazide, and p,p'-oxybisbenzenesulfonyl semicarbazide that generate nitrogen. Of these, azodicarbonamide (ADCA), dinitrosopentamethylenetetramine (DPT), and inorganic foaming agents are preferable in terms of production workability. One of such foaming agents may be used alone or two or more thereof may be used in combination.

The content of the foaming agent in the rubber composition is not limited, but is preferably 1 to 10 parts by mass and more preferably 2 to 8 parts by mass per 100 parts by mass of the rubber component.

--Sulfuric acid metal salt--

When the rubber composition contains a sulfuric acid metal salt as the void-introducing agent, the sulfuric acid metal salt protrudes from the surface of the rubber member (e.g., tire surface) obtained by vulcanizing the rubber composition and provides a claw function without the disadvantage of being abrasive. Subsequently, the gradual evacuation of the sulfuric acid metal salt from the rubber matrix creates spaces that serve as a storage volume and channels for draining the water film from the ice surface. Under these conditions, the contact between the surface of the rubber member (e.g., the tire surface (especially the tread surface)) and the ice is no longer lubricated, and the coefficient of friction is thus improved.

Examples of the sulfuric acid metal salt include magnesium sulfate, calcium sulfate, and barium sulfate, of which magnesium sulfate is preferred.

The sulfuric acid metal salt is preferably particles having sizes in the order of micrometers. Specifically, the mean grain size and the median grain size (both expressed in mass) are preferably 1 μm to 1 mm, and the median grain size is preferably 2 μm to 800 μm.

When the mean grain size and the median grain size are 1 μm or more, the target technical effect (i.e., formation of appropriate fine roughness) is likely to be achieved. In addition, when the mean grain size and the median grain size are 1 mm or less, a decrease in the aesthetical characteristic is prevented (i.e., the appearance of particles that are too obvious on the tread surface is prevented) and the grip performance on melting ice is less likely to be impaired, especially when the rubber composition is used as a tread.

For all of these reasons, the median grain size of the sulfuric acid metal salt is even more preferably 2 μm to 500 μm, and particularly preferably 5 μm to 200 μm. This particularly preferred grain size range seems to correspond to an optimal compromise between the desired surface roughness on the one hand and good contact between the rubber composition and ice on the other.

Furthermore, for the same reasons as above, the content of the sulfuric acid metal salt in the rubber composition is preferably 5 to 40 parts by mass, more preferably 10 to 35 parts by mass, per 100 parts by mass of the rubber component.

Note that various known methods for grain size analyses and calculations of the median grain size of the microparticles (or mean diameter of the microparticles assuming that they are substantially spherical) can be applied, such as the method using laser diffraction (see, for example, the standard ISO-8130-13 or standard JIS K5600-9-3), for example.

In addition, a grain size analysis by mechanical sieving can also be easily and preferably used. The operation thereof includes sifting a defined amount of sample (e.g., 200 g) on a vibrating table for 30 minutes with sieves having various sieve diameters (e.g., 1000, 800, 630, 500, 400, ···, 100, 80, and 63 μm meshes according to a progressive ratio equal to 1.26). The particles with excess sizes left on each sieve are collected and weighed on a precision balance, and the percent of particles with excess sizes at each mesh diameter relative to the total mass of the material is estimated from the weight thereof. Finally, the median grain size (or median diameter) or mean grain size (or mean diameter) is calculated from a histogram of the grain size distribution by a known method.

--Thermally expandable microcapsules--

Thermally expandable microcapsules are made of a thermally expandable substance encapsulated in a shell material made of a thermoplastic resin. The shell material of the thermal expansive microcapsules can be formed from a nitrile-based polymer.

The thermal expansive substance encapsulated in the shell material of the microcapsules has the property of vaporizing or expanding by heat, and examples thereof include at least one selected from the group consisting of hydrocarbons such as isoalkanes and normal alkanes. Examples of isoalkanes include isobutane, isopentane, 2-methylpentane, 2-methylhexane, and 2,2,4-trimethylpentane. Examples of normal alkanes include n-butane, n-propane, n-hexane, n-heptane, and n-octane. These hydrocarbons may be used alone or may be used in combination with two or more. A preferred form of thermal expansive material is a hydrocarbon that is liquid at room temperature dissolved in a hydrocarbon that is gas at room temperature. By using such a mixture of hydrocarbons, sufficient expansion force can be obtained from low to high temperature regions in the vulcanization molding temperature range (150°C to 190°C) for unvulcanized tires.

As such thermal expansive microcapsules, for example, products having trade names of "EXPANCEL 091DU-80", "EXPANCEL 092DU-120", etc. manufactured by Expancel, Sweden, or products having trade names of "Matsumoto Microsphere F-85D", "Matsumoto Microsphere F-100D", etc. manufactured by Matsumoto Yushi-Seiyaku Co., Ltd. can be used.

The content of the thermally expandable microcapsules in the rubber composition is preferably 0.1 to 10 parts by mass, and more preferably 0.5 to 5 parts by mass, per 100 parts by mass of the rubber component.

--Porous cellulose particles--

When the rubber composition contains porous cellulose particles as the void-introducing agent, water on icy or snowy surfaces is absorbed by the porous cellulose particles when the porous cellulose particles are exposed on the surface of the rubber member (e.g., tire surface) that is obtained by vulcanizing the rubber composition. Accordingly, when the rubber member is applied to a tire, water present between the tire and the road surface is removed. In addition, the presence of cellulose, which is a polysaccharide, enhances the interaction between the tire and the water on the icy or snowy surface.

The porous cellulose particles are cellulose particles having a porous structure with a porosity of 75 to 95%, and can significantly improve on-ice performance when blended into the rubber composition. A porosity of 75% or more of the porous cellulose particles provides an excellent effect of improving the on-ice performance, while a porosity of 95% or lower enhances the strength of the particles. The porosity is more preferably 80 to 90%.

Note that the porosity of the porous cellulose particles can be determined as follows. The volume of a sample (i.e., porous cellulose particles) of a certain mass is measured with a measuring cylinder to determine the bulk specific gravity. The porosity is calculated from the following formula.

Porosity [%] = {1 - (bulk specific gravity of sample [g/mL]) / (true specific gravity of sample [g/mL])} $\times$ 100

Here, the true specific gravity of cellulose is 1.5.

The particle diameter of the porous cellulose particles is not particularly limited, but from the viewpoint of wear resistance performance, those with a mean particle diameter of 1000 $\mu$m or less are preferably used. The lower limit of the mean particle diameter is not particularly limited, but is preferably 5 $\mu$m or more. The mean particle diameter is more preferably 100 to 800 $\mu$m, and even more preferably 200 to 800 $\mu$m.

Spherical particles with a ratio of the long diameter to the short diameter of 1 to 2 are preferably used as the porous cellulose particles. The use of particles with such a spherical structure improves their dispersibility into the rubber composition and contributes to improved on-ice performance and maintenance of wear resistance performance and other performance. The ratio of the long diameter to the short diameter is more preferably 1.0 to 1.5.

The mean particle diameter of the porous cellulose particles and the ratio of the long diameter to the short diameter are determined as follows. Specifically, porous cellulose particles are observed under a microscope to obtain an image(s). Using the image(s), the long diameters and the short diameters of 100 particles (if the long diameters and the short diameters are the same, the lengths in one axial direction and the lengths in an axial direction orthogonal to the one axial direction) are determined, and the average value is calculated to determine the mean particle diameter. The ratio of the long diameter to the short diameter is obtained by dividing the long diameters by the short diameters and determining the average of the resultant values.

Such porous cellulose particles are commercially available as "Viscopearl" from Rengo Co., Ltd., and are also disclosed in JP 2001-323095 A, JP 2004-115284 A, or the like. They can be suitably used.

The content of the porous cellulose particles in the rubber composition is preferably 0.3 to 20 parts by mass per 100 parts by mass of the rubber component. A content of 0.3 parts by mass or more increases the effect of improving the on-ice performance, and a content of 20 parts by mass or less prevents the hardness of the rubber from being excessively high and preventing a decrease in wear resistance performance. The content of the porous cellulose particles is more preferably 1 to 15 parts by weight, and even more preferably 3 to 15 parts by mass.

--Lignin derivative--

When the rubber composition contains a lignin derivative as the void-introducing agent, the effect of improving the on-ice performance can be improved.

Here, a lignin sulfonic acid salt is preferably used as the lignin derivative. Examples of the lignin sulfonic acid salt include alkali metal salts, alkaline earth metal salts, ammonium salts, and alcohol amine salts of lignin sulfonic acids, and at least one of these may be used. Alkali metal and/or alkaline earth metal salts of lignin sulfonic acids are preferred, such as potassium, sodium, calcium, magnesium, lithium, and barium salts, and a mixture of these salts may be used.

The content of the lignin derivative in the rubber composition is preferably 0.3 to 20 parts by mass per 100 parts by mass of the rubber component. A content of 0.3 parts by mass or more increases the effect of improving the on-ice performance, and a content of 20 parts by mass or less prevents the hardness of the rubber from being an excessively high and preventing a decrease in wear resistance performance. The content of the lignin derivative is more preferably 1 to 15 parts by mass, and even more preferably 3 to 15 parts by mass.

(Amine-based antioxidant)

The tire rubber composition of the present disclosure contains an amine-based antioxidant represented by the above general formula (1). Although the amine-based antioxidant represented by the general formula (1) contains a phenylenediamine moiety similar to N-phenyl-N'-(1,3-dimethylbutyl)-p-phenylenediamine (antioxidant 6PPD), it differs from the antioxidant 6PPD in that it has no double bond other than the phenylenediamine moiety. The amine-based antioxidant represented by the general formula (1) has the effects of improving the aging resistance (ozone resistance) of the rubber composition and suppressing the decreases in the tensile stress, elongation at break (EB), and tensile strength (TB) after exposure to high temperatures.

In the above general formula (1), $R^1$ and $R^2$ are each independently a monovalent saturated hydrocarbon group. $R^1$ and $R^2$ can be the same or different, but from a synthetic point of view, they are preferably the same.

The number of carbon atoms of the monovalent saturated hydrocarbon group is preferably 1 to 20, more preferably 3 to 10, and particularly preferably 6 and 7. When the number of carbons of saturated hydrocarbon groups is 20 or less, the moles per unit mass are increased, which enhances the age resisting effect and improves the aging resistance and breaking resistance of the rubber composition.

From the viewpoint of further improving the aging resistance and breaking resistance of the rubber composition, $R^1$ and $R^2$ in the above general formula (1) are each independently preferably a chain or cyclic monovalent saturated hydrocarbon group having 1 to 20 carbon atoms.

Examples of the monovalent saturated hydrocarbon group include alkyl groups and cycloalkyl groups. The alkyl groups may be linear or branched, and the cycloalkyl groups may further have alkyl groups, etc. attached as substituents.

Examples of the alkyl groups include methyl group, ethyl group, n-propyl group, isopropyl group, n-butyl group, isobutyl group, sec-butyl group, tert-butyl group, 1,2-dimethylbutyl group, 1,3-dimethylbutyl group, 2,3-dimethylbutyl group, n-pentyl group, isopentyl group, neopentyl group, 1-methylpentyl group, 2-methylpentyl group, 3-methylpentyl group, 4-methylpentyl group, 1,2-dimethylpentyl group, 1,3-dimethylpentyl group, 1,4-dimethylpentyl group, 2,3-dimethylpentyl group, 2,4-dimethylpentyl group, 3,4-dimethylpentyl group, n-hexyl group, 1-methylhexyl group, 2-methylhexyl group, octyl groups, decyl groups, and dodecyl groups, of which 1,4-dimethylpentyl group is preferred.

Examples of the cycloalkyl group include cyclopentyl group, methylcyclopentyl groups, cyclohexyl group, methylcyclohexyl group, cycloheptyl group, and cyclooctyl group, of which cyclohexyl group is preferred.

Examples of the amine-based antioxidant represented by the above general formula (1) specifically include N,N'-bis(1,4-dimethylpentyl)-p-phenylenediamine (antioxidant 77PD), N,N'-bis(1-ethyl-3-methylpentyl)-p-phenylenediamine, and N,N'-dicyclohexyl-p-phenylenediamine (antioxidant CCPD). Of these, N,N'-bis(1,4-dimethylpentyl)-p-phenylenediamine (antioxidant 77PD) and N,N'-dicyclohexyl-p-phenylenediamine (CCPD) are preferable, with N,N'-bis(1,4-dimethylpentyl)-p-phenylenediamine (antioxidant 77PD) being particularly preferred. The above-mentioned amine-based antioxidants may be used alone or in combination of two or more.

The content of the amine-based antioxidant is 0.1 to 11 parts by mass per 100 parts by mass of the rubber component. If the content of the amine-based antioxidant is less than 0.1 parts by mass per 100 parts by mass of the rubber component, aging resistance of the rubber composition cannot be sufficiently ensured and the decreases in the

tensile stress, elongation at break (EB), and tensile strength (TB) after exposure to high temperatures cannot be sufficiently suppressed. Furthermore, in an embodiment containing a foaming agent as the void-introducing agent, if the content of the amine-based antioxidant is less than 0.1 parts by mass per 100 parts by mass of the rubber component, the effect of improving the balance between the reaction rate of the foaming agent and the vulcanization reaction rate of the rubber composition becomes insufficient. On the other hand, if the content of the amine-based antioxidant exceeds 11 parts by mass per 100 parts by mass of the rubber component, the adverse effects on rubber properties other than aging resistance (heat generation property, etc.) increase, which makes the composition unsuitable for tire applications. The content of the amine-based antioxidant is preferably 0.5 parts by mass or more, even preferably 1 part by mass or more per 100 parts by mass of the rubber component from the viewpoint of aging resistance, and is preferably 10 parts by mass or less, and even preferably 8 parts by mass or less per 100 parts by mass of the rubber component from the viewpoint of effect on other rubber properties.

(Quinoline-based antioxidant)

The tire rubber composition may contain a quinoline-based antioxidant. The quinoline-based antioxidant is an antioxidant having a quinoline moiety or a derivative moiety thereof (such as a dihydroquinoline moiety). The quinoline-based antioxidant has the effects of improving the aging resistance (ozone resistance) of the rubber composition and suppressing the decreases in the elongation at break (EB) and the retention ratio of the tensile strength (TB) after exposure to high temperatures.

The quinoline-based antioxidant preferably has a dihydroquinoline moiety, and even preferably has a 1,2-dihydroquinoline moiety.

Specifically, examples of the quinoline-based antioxidant include a polymer of 2,2,4-trimethyl-1,2-dihydroquinoline (antioxidant TMDQ), 6-ethoxy-2,2,4-trimethyl-1,2-dihydroquinoline, and 6-anilino-2,2,4-trimethyl-1,2-dihydroquinoline.

The quinoline-based antioxidant preferably contains a polymer of 2,2,4-trimethyl-1,2-dihydroquinoline (antioxidant TMDQ). A quinoline-based antioxidant containing a polymer of 2,2,4-trimethyl-1,2-dihydroquinoline is highly effective in improving the aging resistance of the rubber composition, and also has the advantage of being less prone to causing discoloration of the rubber composition.

Note that examples of the polymer of 2,2,4-trimethyl-1,2-dihydroquinoline include a dimer, trimer, and tetramer of 2,2,4-trimethyl-1,2-dihydroquinoline.

The content of the quinoline-based antioxidant is preferably 0.1 to 5 parts by mass per 100 parts by mass of the rubber component. When the content of the quinoline-based antioxidant is 0.1 parts by mass per 100 parts by mass of the rubber component, aging resistance of the rubber composition is improved and the decreases in the elongation at break (EB) and tensile strength (TB) after exposure to high temperatures can be further suppressed. On the other hand, when the content of the quinoline-based antioxidant is 5 parts by mass or less per 100 parts by mass of the rubber component, the adverse effects on rubber properties other than aging resistance (heat generation property, etc.) are suppressed, which makes the composition suitable for tire applications. The content of the quinoline-based antioxidant is more preferably 0.3 parts by mass or more, even more preferably 0.5 parts by mass or more per 100 parts by mass of the rubber component from the viewpoint of aging resistance, and is more preferably 4 parts by mass or less, even more preferably 3 parts by mass or less per 100 parts by mass of the rubber component from the viewpoint of effect on other rubber properties.

(Foaming aid)

The tire rubber composition may contain a foaming aid. In particular, when the rubber composition contains a foaming agent as the void-introducing agent, it is preferable to include a foaming aid.

Examples of the foaming aids include urea, zinc stearate, zinc benzenesulfinate, and zinc oxide, of which urea is widely known. These may be used alone or in combination of two or more.

By using the foaming aid, foam reaction can be promoted to enhance the degree of completion of the reaction, thus suppressing unwanted degradation over time.

The total content of the foaming agent and the foaming aid is preferably 1 to 30 parts by mass per 100 parts by mass of the rubber component. When the total content of the foaming agent and the foaming aid is 1 part by mass or more, the rubber composition can be sufficiently foamed during vulcanization and the foaming ratio of vulcanized rubber can be maintained high. On the other hand, when the total content of the foaming agent and foaming aid is 30 parts by mass or less, the decrease in the foaming ratio can also be suppressed. In addition, from the viewpoint of improving the foaming ratio, the total content of the foaming agent and the foaming aid is preferably 3 parts by mass or more, and more preferably 5 parts by mass or more per 100 parts by mass of the rubber component. Furthermore, from the viewpoint of improving the foaming ratio, the total content of the foaming agent and the foaming aid is preferably 25

parts by mass or less, and more preferably 20 parts by mass or less per 100 parts by mass of the rubber component.

In the aforementioned rubber composition, the mass ratio of the foaming agent to the foaming aid (foaming agent : foaming aid) is preferably 1 : 1.1 to 1 : 3.3. When this mass ratio (foaming agent : foaming aid) is in the range of 1 : 1.1 to 1 : 3.3, the rubber composition foams sufficiently during vulcanization and the foaming ratio of vulcanized rubber is improved. In addition, from the viewpoint of improving the foaming ratio, the mass ratio of the foaming agent to the foaming aid (foaming agent : foaming aid) is preferably 1 : 1.2 or more, more preferably 1 : 1.3 or more. Furthermore, from the viewpoint of improving the foaming ratio, a mass ratio of the foaming agent to the foaming aid (foaming agent : foaming aid) is preferably 1 : 3.2 or less, more preferably 1 : 3.1 or less, even more preferably 1 : 2.9 or less, still even more preferably 1 : 2.7 or less, further more preferably 1 : 2.5 or less, and particularly preferably 1 : 2.3 or less.

In addition, in view of the foaming ratio of vulcanized rubber and the on-ice performance of a tire, the content of the foaming aid is preferably in the range of 4 to 14 parts by mass, and more preferably in the range of 6 to 14 parts by mass, per 100 parts by mass of the rubber component.

(Organic acid)

The rubber composition may contain an organic acid as required. In this case, the SP value of the organic acid is preferably 9.15 to 16.0 $(cal/cm^3)^{1/2}$. During the vulcanization of the rubber composition, the organic acid acts to improve the foaming ratio of the vulcanized rubber by balancing the rate of decomposition and foaming reaction of the foaming agent and the rate of vulcanization reaction of the rubber composition. Accordingly, when an organic acid is blended into the rubber composition, it promotes the decomposition and foaming reaction of the foaming agent and balances the rate of decomposition and foaming reaction with the rate of vulcanization reaction of the rubber composition, thereby improving the foaming ratio of vulcanized rubber, while maintaining good workability of the rubber composition. Thus, when the rubber composition is applied to a tire, the on-ice performance of the tire is improved.

If the SP value of the organic acid is less than 9.15 $(cal/cm^3)^{1/2}$, the decomposition of the foaming agent may not be sufficiently promoted. Or, if the SP value of the organic acid exceeds 16.0 $(cal/cm^3)^{1/2}$, the rubber composition containing the organic acid may adhere to manufacturing facilities such as rolls during the production of the rubber composition, and the workability of the rubber composition may be reduced.

From the same viewpoints, the SP value of the organic acid is preferably 10.5 to 14.3 $(cal/cm^3)^{1/2}$. When the SP value of the organic acid is 10.5 $(cal/cm^3)^{1/2}$ or more, the effect of promoting the decomposition of the foaming agent is further enhanced. When the SP value of the organic acid is 14.3 $(cal/cm^3)^{1/2}$ or less, the adhesiveness of the rubber composition containing the organic acid can be further reduced and the workability of the rubber composition is further improved.

Since stearic acid, which is a generally-used vulcanization aid for rubber compositions, has an SP value of 9.12 $(cal/cm^3)^{1/2}$, its effect of promoting the decomposition of the foaming agent less effective is low.

In the present specification, SP values (solubility parameters) of organic acids are calculated according to the Fedors method.

The organic acid may be any of monocarboxylic, dicarboxylic, or tricarboxylic acids, and may also be aliphatic or aromatic. Furthermore, it may have a functional group other than the carboxyl group(s), such as a hydroxyl group, a ketone group, and an ethylenically unsaturated group.

Organic acids with an aromatic ring (aromatic organic acids) are preferred, and monocarboxylic acids are also preferred. When the organic acid has an aromatic ring, the adhesion of the rubber composition can be further reduced, and the workability of the rubber composition is further improved, so that the rubber composition becomes even less likely to adhere to manufacturing facilities such as rolls.

Examples of the aliphatic monocarboxylic acid include palmitic acid and like.

Examples of the dicarboxylic acid include oxalic acid, malonic acid, succinic acid, glutaric acid, adipic acid, pimelic acid, suberic acid, azelaic acid, and sebacic acid.

Examples of the aromatic monocarboxylic acid include benzoic acid and salicylic acid.

Examples of the aromatic dicarboxylic acid include phthalic acid and the like.

Examples of the organic acids having a functional group other than carboxyl group(s) include tartaric acid, malic acid, maleic acid, glycolic acid, and $\alpha$-ketoglutaric acid.

These organic acids may be used alone or in combination of two or more.

In addition, benzoic acid is particularly preferably used as the organic acid. When benzoic acid is blended into the rubber composition, the adhesion of the rubber composition can be further reduced, and the workability of the rubber composition is further improved, so that the rubber composition becomes even less likely to adhere to manufacturing facilities such as rolls.

The content of the organic acid is preferably 0.1 to 7 parts by mass, more preferably 1.5 to 7 parts by mass, and even more preferably 3 to 7 parts by mass per 100 parts by mass of the rubber component, from the viewpoint of workability of the rubber composition, the foaming ratio of vulcanized rubber, and the on-ice performance of a tire.

In addition, from the viewpoint of the foaming ratio of the vulcanized rubber and the on-ice performance of a tire, the total content of the foaming agent and the organic acid is preferably 3 parts by mass or more and less than 15 parts by mass, per 100 parts by mass of the rubber component. The range of 5 parts by mass or more and less than 15 parts by mass is more preferred, and the range of 7 parts by mass or more and less than 15 parts by mass is even more preferred.

Furthermore, from the viewpoint of the foaming ratio of vulcanized rubber and the on-ice performance of a tire, the mass ratio of the foaming agent to the organic acid (foaming agent : organic acid) is preferably in the range of 1 : 0.5 to 1 : 1.5, and more preferably in the range of 1 : 0.7 to 1 : 1.3.

(Wax)

The tire rubber composition of the present disclosure preferably further contains a wax. When the rubber composition contains a wax, the aging resistance (ozone resistance) of the rubber composition is further improved.

Examples of the wax include paraffin wax and microcrystalline wax.

The content of the wax is preferably 0.1 to 5 parts by mass per 100 parts by mass of the rubber component. When the content of the wax is 0.1 parts by mass or more per 100 parts by mass of the rubber component, the aging resistance of the rubber composition is further improved.

Furthermore, when the content of the wax is 5 parts by mass or less per 100 parts by mass of the rubber component, the effects on rubber properties other than aging resistance are small. The content of the wax is more preferably 0.5 parts by mass or more, even more preferably 1 part by mass or more per 100 parts by mass of the rubber component from the viewpoint of aging resistance, and is more preferably 4 parts by mass or less, even more preferably 3 parts by mass or less per 100 parts by mass of the rubber component from the viewpoint of effect on other rubber properties.

(Sulfur)

The tire rubber composition of the present disclosure preferably contains sulfur. The inclusion of sulfur in the rubber composition enables vulcanization and improves the breaking resistance (particularly elongation at break (EB) and tensile strength (TB)) of the rubber composition.

Various types of sulfur can be used as the sulfur, but generally-used sulfur (e.g., soluble sulfur (powdered sulfur)) is preferred over insoluble sulfur, and oil-treated sulfur is also preferred. As used herein, insoluble sulfur is sulfur that is insoluble in carbon disulfide (amorphous polymeric sulfur), and soluble sulfur (powdered sulfur) is sulfur that is soluble in carbon disulfide.

The content of the sulfur is preferably in a range of 0.1 to 10 parts by mass and even preferably in a range of 1 to 5 parts by mass per 100 parts by mass of the rubber component. When the content of sulfur is 0.1 parts by mass or more per 100 parts by mass of the rubber component, the breaking resistance of vulcanized rubber can be secured, and when the content is 10 parts by mass or less per 100 parts by mass of the rubber component, sufficient rubber elasticity can be ensured.

(Other components)

In addition to the rubber component, the void-introducing agent, the amine-based antioxidant, the quinoline-based antioxidant, the foaming aid, the organic acid, the wax, and the sulfur mentioned above, the tire rubber composition of the present disclosure may contain various components generally used in the rubber industry, such as fillers (e.g., silica, carbon black, and calcium carbonate), silane coupling agents, softening agents, processing aids, resins, surfactants, organic acids (e.g., stearic acid) having a SP value outside the range of 9.15 to 16.0 $(cal/cm^3)^{1/2}$, zinc oxide (zinc white), vulcanization accelerators, and vulcanizing agents other than sulfur, which may be selected as needed, to the extent that they do not impair the purpose of the present disclosure. Commercial products are suitable for use as these compounding agents.

Note that the amine-based antioxidant represented by the above general formula (1) may be supported on any carrier. For example, the amine-based antioxidant represented by the above general formula (1) may be supported on an inorganic filler such as silica and calcium carbonate.

Furthermore, the amine-based antioxidant represented by the above general formula (1) may form a master batch together with the rubber component. Here, the rubber component used to produce the master batch is not limited, and may be diene rubber such as natural rubber (NR), or ethylene-propylene-diene rubber (EPDM), or the like.

Furthermore, the amine-based antioxidant represented by the above general formula (1) may also be a salt with an organic acid. Here, the organic acid used to form the salt is not particularly limited, and examples include stearic acid.

(Method of manufacturing rubber composition)

The method of manufacturing the rubber composition is not particularly limited, but the rubber composition can be manufactured, for example, by blending the rubber component, the void-introducing agent, and the amine-based antioxidant mentioned above with various components selected as needed, and then kneading, warming, extruding, etc. Furthermore, the resulting rubber composition can be vulcanized to produce vulcanized rubber.

There are no particular limitations on the kneading conditions, and various conditions, such as the volume charged into the kneading apparatus, the rotor rotation speed, the ram pressure, the kneading temperature, the kneading time, and the type of the kneading apparatus, may be appropriately selected depending on the purpose. Examples of the kneading apparatus include Banbury mixers, intermixes, kneaders, rolls, and other apparatuses, which are generally used for kneading rubber compositions.

There are also no particular limitations on the conditions of warming, and various conditions such as warming temperature, warming time, and warming apparatus can be appropriately selected depending on the purpose. Examples of the warming apparatus include a warming roller machine and other apparatuses generally used for warming rubber compositions.

There are also no particular limitations on the conditions of extrusion, and various conditions such as extrusion time, extrusion speed, extrusion apparatus, and extrusion temperature can be appropriately selected depending on the purpose. Examples of the extrusion apparatus include an extruder and other apparatuses generally used for extruding rubber compositions. The extrusion temperature can be determined as appropriate.

There are no particular limitations on the apparatus, method, conditions, etc. for performing the vulcanization, which may be appropriately selected depending on the purpose. Examples of the apparatus for vulcanization include molding vulcanizers and other apparatuses generally used for vulcanizing rubber compositions. The conditions for vulcanization are such that the temperature is, for example, about 100°C to 190°C.

<Tire rubber member>

The tire rubber member of the present disclosure is a tire rubber member having voids, and includes a rubber component and an amine-based antioxidant represented by the following general formula (1):

[Chem. 4]

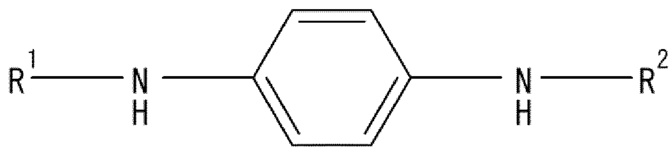

··· (1)

where $R^1$ and $R^2$ are each independently a monovalent saturated hydrocarbon group, wherein the content of the amine-based antioxidant is 0.1 to 11 parts by mass per 100 parts by mass of the rubber component.

Since the tire rubber member of the present disclosure has voids, it has an excellent on-ice performance. In addition, since the tire rubber member of the present disclosure contains 0.1 parts by mass or more of the amine-based antioxidant represented by the above general formula (1) per 100 parts by mass of the rubber component, the aging resistance (ozone resistance) is improved and decreases in the tensile stress, the elongation at break (EB), the tensile strength (TB) after exposure to high temperatures can be suppressed, thereby improving the breaking resistance.

Accordingly, the tire rubber member of the present disclosure has excellent on-ice performance and breaking resistance (especially breaking resistance after exposure to high temperatures) despite having voids. In addition, when applied to the tread, the tire rubber member of the present disclosure can improve the breaking resistance and crack resistance of the tread where heat is generated during driving.

The tire rubber member of the present disclosure can be made, for example, from the tire rubber composition of the present disclosure described above. In this case, when a foaming agent or thermal expansive microcapsules are included as the void-introducing agent, the tire rubber member having voids can be manufactured by forming voids through heating or other means. Alternatively, when a sulfuric acid metal salt, porous cellulose particles, or a lignin derivative is included as the void-introducing agent, the sulfuric acid salt, the porous cellulose particles, or the lignin derivative progressively exits the rubber matrix when used, leaving spaces and resulting in a tire rubber member having voids.

The rubber component and the amine-based antioxidant represented by the general formula (1) used in the tire rubber composition described above can be used as the rubber component and the amine-based antioxidant represented by the general formula (1) to be contained in the tire rubber member of the present disclosure, and the contents and blending ratios of these are similar.

Similarly, various compounding agents that can be blended into the tire rubber composition described above may also be blended into the tire rubber member of the present disclosure as appropriate.

<Tire>

The tire of the present disclosure includes a rubber member made of the tire rubber composition described above or the tire rubber component described above.

Since the tire of the present disclosure has a rubber member made of the tire rubber composition described above or the tire rubber member described above, it has excellent on-ice performance and breaking resistance (especially breaking resistance after exposure to high temperatures) despite having voids.

A suitable example of the rubber member is a tread rubber that constitutes the tread of a tire or the like. In addition, a tire having the rubber member in the tread has excellent breaking resistance and crack resistance.

In accordance with the type of tire to be applied, the tire of the present disclosure may be obtained by first shaping a tire using an unvulcanized rubber composition and then vulcanizing the tire, or by first shaping a tire using semi-vulcanized rubber yielded by a preliminary vulcanization process and then fully vulcanizing the tire. The tire of the present disclosure is preferably a pneumatic tire. The pneumatic tire may be filled with ordinary air or air with an adjusted partial pressure of oxygen, or may also be filled with an inert gas such as nitrogen, argon, or helium.

EXAMPLES

The present disclosure will be described in more detail below with reference to examples, although the present disclosure is not limited to these examples.

<Preparation and evaluation of rubber composition>

Rubber compositions were produced according to the formulations summarized in Tables 1 and 2. For the resulting rubber composites, the foaming ratio was measured by the following method, and the on-ice performance and the retention ratio of tensile stress (M300) at a 300% elongation after degradation were also evaluated. Furthermore, the on-ice performance and the breaking resistance were comprehensively evaluated from the sum of the index value of the on-ice performance and the retention ratio (%) of the tensile stress at a 300% elongation (M300). The results are summarized in Tables 1 and 2.

(1) Measurement method for foaming ratio

A vulcanized rubber specimen was prepared through vulcanization by the normal method, and the density $\rho 1$ (g/cm$^3$) of the specimen was measured. The density $\rho 0$ (g/cm$^3$) of non-foamed rubber (solid phase rubber) was measured, and the foaming ratio (Vs) was calculated from the following formula.

$$Vs = (\rho 0 / \rho 1 - 1) \times 100\ (\%)$$

In Table 1, when the foaming ratio was within the range of 10 to 20%, the evaluation "Good" was given.

(2) Evaluation method for on-ice performance

A vulcanized rubber specimen was prepared through vulcanization by the normal method. The frictional force developed when the specimen was pressed against fixed ice at -2°C and was reciprocated was detected with a load cell, and the coefficient of dynamic friction $\mu$ was calculated.

The evaluation results were expressed as indices with the coefficient of dynamic friction $\mu$ of Comparative Example 1 being 100 in Table 1, or with the coefficient of dynamic friction $\mu$ of Comparative Example 2 being 100 in Table 2. A higher index indicates better on-ice performance.

(3) Evaluation method for retention ratio of tensile stress (M300) at 300% elongation

A vulcanized rubber specimen was prepared through vulcanization by the normal method, and the initial tensile stress (M300) at a 300% elongation of the vulcanized rubber specimen was measured according to JIS K 6251.

A vulcanized rubber specimen prepared in the same manner was allowed to degrade by leaving it in a thermostatic bath at 100°C for 24 hours, and the tensile stress (M300) at a 300% elongation of the vulcanized rubber specimen after degradation was measured.

The retention ratio after degradation was calculated according to the following formula from the initial tensile stress at a 300% elongation (M300) and the tensile stress at a 300% elongation (M300) after degradation of the vulcanized rubber specimens produced from the rubber composition in each example.

Retention ratio after degradation (%) = (M300 after degradation) / (initial M300) × 100

A higher retention ratio after degradation indicates better breaking resistance after exposure to higher temperatures.

[Table 1]

| | | | | Comp. Ex. 1 | Example 1 |
|---|---|---|---|---|---|
| Formulation | Rubber component | NR *1 | parts by mass | 50 | 50 |
| | | BR *2 | | 30 | 30 |
| | | SBR *3 | | 20 | 20 |
| | Filler | Carbon black *4 | | 35 | 35 |
| | | Silica*5 | | 35 | 35 |
| | Antioxidant | 6PPD *6 | | - | - |
| | | 77PD *7 | | - | 2 |
| | Softener *8 | | | 35 | 35 |
| | Foaming agent *9 | | | 5.0 | 5.0 |
| | Other agents | | | 15 | 15 |
| Evaluation results | Characteristics before degradation | Foaming ratio | - | Good | Good |
| | | On-ice performance | index | 100.0 | 104.6 |
| | Retention ratio after degradation | M300 | % | 108.1 | 113.0 |
| | Compherensive evaluation | | - | 208.1 | 217.6 |

[Table 2]

| | | | | Comp. Ex. 2 | Example 2 | Comp. Ex. 3 | Example 3 | Example 4 | Comp. Ex. 4 |
|---|---|---|---|---|---|---|---|---|---|
| Formulation | Rubber component | NR *1 | parts by mass | 50 | 50 | 50 | 50 | 50 | 50 |
| | | BR *2 | | 30 | 30 | 30 | 30 | 30 | 30 |
| | | SBR *3 | | 20 | 20 | 20 | 20 | 20 | 20 |
| | Filler | Carbon black *4 | | 35 | 35 | 35 | 35 | 35 | 35 |
| | | Silica*5 | | 35 | 35 | 35 | 35 | 35 | 35 |
| | Antioxidant | 6PPD *6 | | 2 | - | 5 | - | - | - |
| | | 77PD *7 | | - | 5 | - | 8 | 11 | 12 |
| | Softener *8 | | | 35 | 35 | 35 | 35 | 35 | 35 |
| | Foaming agent *9 | | | 5.0 | 5.0 | 5.0 | 5.0 | 5.0 | 5.0 |
| | Other agents | | | 15 | 15 | 15 | 15 | 15 | 15 |

(continued)

| | | | | Comp. Ex. 2 | Example 2 | Comp. Ex. 3 | Example 3 | Example 4 | Comp. Ex. 4 |
|---|---|---|---|---|---|---|---|---|---|
| Evaluation results | Characteristics before degradation | Foaming ratio | - | Good | Good | Good | Good | Good | Good |
| | | On-ice performance | index | 100.0 | 106.4 | 89.2 | 102.3 | 106.4 | 102.9 |
| | Retention ratio after degradation | M300 | % | 112.1 | 109.5 | 112.9 | 111.5 | 109.6 | 110.5 |
| | Compherensive evaluation | | - | 212.1 | 215.9 | 202.1 | 213.8 | 216.0 | 213.4 |

*1 NR: natural rubber
*2 SBR: butadiene rubber, manufactured by ZEON Corporation, high cis-BR
*3 SBR: solution polymerized styrene-butadiene rubber, with styrene bond content of 10 mass%
*4 Carbon black: with nitrogen adsorption specific surface area of 148 $m^2/g$, manufactured by Asahi Carbon Co. Ltd.
*5 Silica: with nitrogen adsorption specific surface area of 222 $m^2/g$, manufactured by Tosoh Corporation
*6 Antioxidant 6PPD: N-phenyl-N'-(1,3-dimethylbutyl)-p-phenylenediamine as an amine-based antioxidant where one of $R^1$ and $R^2$ in the general formula (1) is an unsaturated hydrocarbon group (phenyl group), trade name "Antigen 6C" manufactured by Sumitomo Chemical Co., Ltd.
*7 Antioxidant 77PD: N,N'-bis(1,4-dimethylpentyl)-p-phenylenediamine as an amine-based antioxidant where $R^1$ and $R^2$ in the general formula (1) are saturated hydrocarbon groups (1,4-dimethylpentyl groups), trade name "Santoflex 77PD" manufactured by EASTMAN Chemical Company
*8 Softener: total amount of softener components including resin, oil, and liquid polymer
*9 Foaming agent: dinitrosopentamethylene tetramine, trade name "Cellular" manufactured by EIWA CHEMICAL IND. CO., LTD.
*10 Other agents: the total amount of other agents including at least silane coupling agent, vulcanization accelerator, and sulfur

It can be understood from Tables 1 and 2 that the rubber compositions of the examples containing 0.1 to 11 parts by mass of the amine-based antioxidant represented by the above general formula (1) per 100 parts by mass of the rubber component together with the foaming agent (void-introducing agent) achieved both on-ice performance and breaking resistance (especially, breaking resistance after exposure to high temperatures).

Although not wishing to be bound by theory, the greater M300 after degradation compared to the initial M300 in each example and comparative example is considered to be due to the further curing of the foam rubbers by heat.

## Claims

**1.** A tire rubber composition comprising:

a rubber component, a void-introducing agent, and an amine-based antioxidant represented by the following general formula (1):

[Chem. 1]

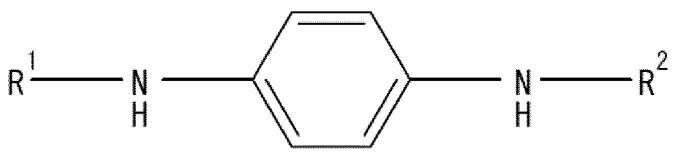

··· (1)

where $R^1$ and $R^2$ are each independently a monovalent saturated hydrocarbon group,
wherein a content of the amine-based antioxidant is 0.1 to 11 parts by mass per 100 parts by mass of the rubber component.

**2.** The tire rubber composition according to claim 1, wherein the rubber component comprises at least one selected from the group consisting of isoprene skeleton rubber, styrene-butadiene rubber, butadiene rubber, and chloroprene rubber.

**3.** The tire rubber composition according to claim 1 or 2, wherein $R^1$ and $R^2$ in the above general formula (1) are each independently a chain or cyclic monovalent saturated hydrocarbon group having 1 to 20 carbon atoms.

**4.** A tire rubber member having voids, comprising:

a rubber component and an amine-based antioxidant represented by the following general formula (1):

[Chem. 2]

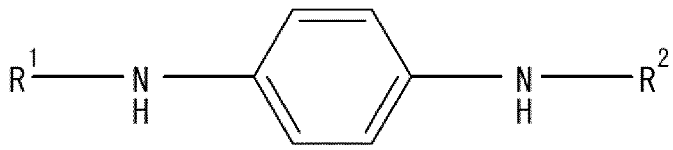

··· (1)

where $R^1$ and $R^2$ are each independently a monovalent saturated hydrocarbon group,
wherein an amount of the amine-based antioxidant is 0.1 to 11 parts by mass per 100 parts by mass of the rubber component.

**5.** A tire comprising a rubber member made of the tire rubber composition according to any one of claims 1 to 3, or the tire rubber member according to claim 4.

**INTERNATIONAL SEARCH REPORT**

International application No.
**PCT/JP2022/038824**

**A. CLASSIFICATION OF SUBJECT MATTER**

***C08L 9/00***(2006.01)i; ***B60C 1/00***(2006.01)i; ***C08K 5/18***(2006.01)i
FI: C08L9/00; C08K5/18; B60C1/00 Z

According to International Patent Classification (IPC) or to both national classification and IPC

**B. FIELDS SEARCHED**

Minimum documentation searched (classification system followed by classification symbols)

C08K3/00 - 13/08, C08L1/00 - 101/14, B60C1/00 - 19/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2017-019888 A (TOYO TIRE & RUBBER CO., LTD.) 26 January 2017 (2017-01-26) claims, paragraphs [0009], [0016], [0040], examples | 1-5 |
| Y | JP 2013-095837 A (SUMITOMO RUBBER INDUSTRIES, LTD.) 20 May 2013 (2013-05-20) claims, paragraphs [0003], [0007], [0025], [0040]-[0042], [0049], examples | 1-5 |
| Y | JP 2015-131543 A (SUMITOMO RUBBER INDUSTRIES, LTD.) 23 July 2015 (2015-07-23) claims, paragraphs [0005], [0014], [0021], examples | 1-5 |
| A | WO 2020/066527 A1 (SUMITOMO RUBBER INDUSTRIES, LTD.) 02 April 2020 (2020-04-02) entire text | 1-5 |
| A | JP 2013-534953 A (MICHELIN RECHERCHE ET TECHNIQUE S. A., COMPAGNIE GENERALE DES ETABLISSEMENTS MICHELIN) 09 September 2013 (2013-09-09) entire text | 1-5 |
| A | JP 2013-221052 A (SUMITOMO RUBBER INDUSTRIES, LTD.) 28 October 2013 (2013-10-28) entire text | 1-5 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 December 2022** | **17 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/038824**

**C. DOCUMENTS CONSIDERED TO BE RELEVANT**

| Category* | Citation of document, with indication, where appropriate, of the relevant passages | Relevant to claim No. |
|---|---|---|
| A | JP 2017-525820 A (LANXESS DEUTSCHLAND GMBH) 07 September 2017 (2017-09-07) entire text | 1-5 |
| A | WO 2020/160000 A1 (FIRESTONE POLYMERS, LLC.) 06 August 2020 (2020-08-06) entire document | 1-5 |
| A | JP 2018-100342 A (TOYO TIRE & RUBBER CO., LTD.) 28 June 2018 (2018-06-28) claims, paragraphs [0013], [0022], [0025], [0026], [0072], examples | 1-5 |
| A | JP 2012-184361 A (TOYO TIRE & RUBBER CO., LTD.) 27 September 2012 (2012-09-27) claims, paragraphs [0013], [0022], [0025], [0026], [0072], examples | 1-5 |
| A | JP 2013-166815 A (TOYO TIRE & RUBBER CO., LTD.) 29 August 2013 (2013-08-29) entire text | 1-5 |
| A | JP 2003-026859 A (THE YOKOHAMA RUBBER CO., LTD.) 29 January 2003 (2003-01-29) entire text | 1-5 |
| A | JP 2002-362108 A (THE OHTSU TIRE & RUBBER CO., LTD.) 18 December 2002 (2002-12-18) entire text | 1-5 |
| A | JP 2006-028430 A (TOYO TIRE & RUBBER CO., LTD.) 02 February 2006 (2006-02-02) entire text | 1-5 |
| A | JP 2016-056248 A (THE YOKOHAMA RUBBER CO., LTD.) 21 April 2016 (2016-04-21) entire text | 1-5 |
| A | JP 2007-224127 A (TOYO TIRE & RUBBER CO., LTD.) 06 September 2007 (2007-09-06) entire text | 1-5 |
| A | JP 2012-025816 A (THE YOKOHAMA RUBBER CO., LTD.) 09 February 2012 (2012-02-09) entire text | 1-5 |
| A | JP 2007-031521 A (TOYO TIRE & RUBBER CO., LTD.) 08 February 2007 (2007-02-08) entire text | 1-5 |
| A | WO 2020/202178 A1 (TVS SRICHAKRA LTD.) 08 October 2020 (2020-10-08) entire document | 1-5 |

Form PCT/ISA/210 (second sheet) (January 2015)

**INTERNATIONAL SEARCH REPORT**
**Information on patent family members**

International application No.
**PCT/JP2022/038824**

| Patent document cited in search report | Publication date (day/month/year) | Patent family member(s) | Publication date (day/month/year) |
|---|---|---|---|
| JP 2017-019888 A | 26 January 2017 | US 2017/0009064 A1<br>claims, paragraphs [0011], [0019], [0043], examples | |
| JP 2013-095837 A | 20 May 2013 | (Family: none) | |
| JP 2015-131543 A | 23 July 2015 | EP 3093159 A1<br>claims, paragraphs [0005], [0014], [0021], examples<br>WO 2015/104985 A1<br>claims, paragraphs [0005], [0014], [0021], examples | |
| WO 2020/066527 A1 | 02 April 2020 | EP 3848209 A1<br>entire document | |
| JP 2013-534953 A | 09 September 2013 | US 2013/0158185 A1<br>entire document<br>WO 2011/162771 A1<br>entire document<br>EP 2585525 A1<br>entire document | |
| JP 2013-221052 A | 28 October 2013 | CN 103374151 A<br>entire document | |
| JP 2017-525820 A | 07 September 2017 | US 2017/0267841 A1<br>entire document<br>WO 2016/030469 A1<br>entire document<br>EP 3186307 A1<br>entire document | |
| WO 2020/160000 A1 | 06 August 2020 | EP 3917976 A1<br>entire document | |
| JP 2018-100342 A | 28 June 2018 | US 2019/0322843 A1<br>claims, paragraphs [0044], [0055], examples<br>WO 2018/116622 A1<br>claims, paragraphs [0044], [0055], examples | |
| JP 2012-184361 A | 27 September 2012 | US 2012/0232186 A1<br>claims, paragraphs [0044], [0055], examples | |
| JP 2013-166815 A | 29 August 2013 | (Family: none) | |
| JP 2003-026859 A | 29 January 2003 | (Family: none) | |
| JP 2002-362108 A | 18 December 2002 | (Family: none) | |
| JP 2006-028430 A | 02 February 2006 | (Family: none) | |
| JP 2016-056248 A | 21 April 2016 | (Family: none) | |
| JP 2007-224127 A | 06 September 2007 | (Family: none) | |
| JP 2012-025816 A | 09 February 2012 | (Family: none) | |
| JP 2007-031521 A | 08 February 2007 | (Family: none) | |
| WO 2020/202178 A1 | 08 October 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014024466 A1
- JP 2001323095 A
- JP 2004115284 A